(19) Europäisches Patentamt
European Patent Office
Office européen des brevets

(11) **EP 4 365 982 A1**

(12) **EUROPEAN PATENT APPLICATION**
published in accordance with Art. 153(4) EPC

(43) Date of publication:
**08.05.2024   Bulletin 2024/19**

(21) Application number: **22832477.8**

(22) Date of filing: **15.03.2022**

(51) International Patent Classification (IPC):
**H01M 4/139** (2010.01)        **H01G 11/50** (2013.01)
**H01G 11/86** (2013.01)        **H01G 13/00** (2013.01)

(52) Cooperative Patent Classification (CPC):
**H01G 11/50; H01G 11/86; H01G 13/00;**
**H01M 4/139;** Y02E 60/10

(86) International application number:
**PCT/JP2022/011576**

(87) International publication number:
**WO 2023/276314 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **28.06.2021   JP 2021106788**

(71) Applicant: **Musashi Energy Solutions Co., Ltd.
Hokuto-shi, Yamanashi 409-1501 (JP)**

(72) Inventors:
 • **YAMAMOTO, Masahiro
 Hokuto-shi, Yamanashi 409-1501 (JP)**
 • **AITA, Kazunari
 Hokuto-shi, Yamanashi 409-1501 (JP)**

(74) Representative: **TBK
Bavariaring 4-6
80336 München (DE)**

(54) **DOPED ELECTRODE MANUFACTURING METHOD AND DOPED ELECTRODE MANUFACTURING SYSTEM**

(57)      A method for manufacturing a doped electrode including an active metal layer doped with an alkali metal is provided. A strip-shaped electrode including an active material layer is conveyed along a path that passes through a doping tank that stores a doping solution containing ions of an alkali metal and an aprotic organic solvent, a counter electrode unit, and a guide mechanism. In the doping tank, a distance between the electrode and the counter electrode unit is maintained in a fixed range by the guide mechanism disposed between the electrode and the counter electrode unit. In the doping tank, the electrode and the counter electrode unit are electrically connected via the doping solution.

FIG. 3

**Description**

CROSS-REFERENCE TO RELATED APPLICATION

This international application claims the benefit of Japanese Patent Application No. 2021-106788, filed on June 28, 2021 in the Japan Patent Office, and the entire disclosure of Japanese Patent Application No. 2021-106788 is incorporated herein by reference.

TECHNICAL FIELD

The present disclosure relates to a method for manufacturing a doped electrode and a system for manufacturing a doped electrode.

BACKGROUND ART

In recent years, downsizing and weight reduction of electronic devices have been remarkable, which further increases a demand for downsizing and weight reduction also of batteries used as drive power supplies for the electronic devices.

To satisfy such a demand for downsizing and weight reduction, nonaqueous electrolyte rechargeable batteries, typified by a lithium-ion rechargeable battery, have been developed. As a power storage device applicable to a use that requires high energy density characteristics and high output characteristics, a lithium ion capacitor is known. In addition, a sodium ion battery and a sodium ion capacitor, using sodium that is lower in cost and is a richer resource than lithium, are also known.

A process of doping an electrode with an alkali metal in advance (generally called pre-doping) is adopted in these batteries and capacitors for various purposes. An example of a method for pre-doping an electrode with an alkali metal may be a continuous method. In the continuous method, the pre-doping is carried out while a strip-shaped electrode is conveyed through a dope solution. In the dope solution, the electrode faces an alkali metal electrode. The continuous method is disclosed in Patent Documents 1 to 4.

PRIOR ART DOCUMENTS

PATENT DOCUMENTS

Patent Document 1: Japanese Unexamined Patent Application Publication No. H10-308212
Patent Document 2: Japanese Unexamined Patent Application Publication No. 2008-77963
Patent Document 3: Japanese Unexamined Patent Application Publication No. 2012-49543
Patent Document 4: Japanese Unexamined Patent Application Publication No. 2012-49544

SUMMARY OF THE INVENTION

PROBLEMS TO BE SOLVED BY THE INVENTION

A strip-shaped electrode may have distortion, non-uniform thickness, wrinkles, and the like. The strip-shaped electrode having distortion, non-uniform thickness, wrinkles, and the like generates a small distance between the electrode and an alkali metal electrode when a continuous pre-doping is performed. In portions with a small distance between the electrode and the alkali metal electrode, an alkali metal is likely to precipitate. In addition, a state occurs where the pre-doping progress differs between the portions where the distance between the electrode and the alkali metal electrode is small and the other portions (hereinafter, referred to as non-uniform doping).

In one aspect of the present disclosure, it is preferable that a method for manufacturing a doped electrode and a system for manufacturing a doped electrode are provided which can inhibit precipitation of the alkali metal and non-uniform doping.

MEANS FOR SOLVING THE PROBLEMS

One aspect of the present disclosure provides a method for manufacturing a doped electrode including an active material layer doped with an alkali metal. In the method for manufacturing a doped electrode, a strip-shaped electrode including an active material layer is conveyed along a path that passes through a doping tank that stores a dope solution containing ions of an alkali metal and an aprotic organic solvent, a counter electrode unit, and a guide mechanism. A distance between the strip-shaped electrode including the active material layer and the counter electrode unit is maintained in a fixed range in the doping tank by the guide mechanism disposed between the strip-shaped electrode including the active material layer and the counter electrode unit. The strip-shaped electrode including the active material layer and the counter electrode unit are electrically connected via the doping solution in the doping tank.

The method for manufacturing a doped electrode in one aspect of the present disclosure can inhibit precipitation of the alkali metal and non-uniform doping.

Another aspect of the present disclosure provides a system for manufacturing a doped electrode that manufactures a doped electrode including an active material layer doped with an alkali metal. The system for manufacturing a doped electrode comprises a doping tank configured to store a dope solution containing ions of an alkali metal and an aprotic organic solvent, a counter electrode unit stored in the doping tank, a guide mechanism stored in the doping tank, a conveyer unit configured to convey the strip-shaped electrode including the active material layer along a path that passes through the doping tank, a connection unit configured to electrically connect a conveyor roller included in the conveyer unit and the counter electrode unit.

The guide mechanism is disposed between the strip-shaped electrode including the active material layer and the counter electrode unit. The guide mechanism is configured to maintain a distance between the strip-shaped electrode including the active material layer and the counter electrode unit in a fixed range in the doping tank.

The system for manufacturing a doped electrode according to another aspect of the present disclosure can inhibit the precipitation of the alkali metal and non-uniform doping.

BRIEF DESCRIPTION OF THE DRAWINGS

FIG. 1 is a plan view showing a configuration of an electrode.
FIG. 2 is a cross-sectional view taken along line II-II in FIG. 1.
FIG. 3 is an explanatory diagram showing a configuration of an electrode manufacturing system.
FIG. 4 is an explanatory diagram showing a configuration and an arrangement of a guide mechanism.
FIG. 5 is a plan view showing an X plane in FIG. 4 as viewed from a Y direction.
FIG. 6 is a cross-sectional view showing a configuration of a guide bar and a guide roll in a cross-section orthogonal to its axial direction.
FIG. 7 is a perspective view showing a configuration and an arrangement of the guide mechanism including the guide rolls.
FIG. 8 is an explanatory view showing positions of negative electrodes in an active material layer formed portion.
FIG. 9 is an explanatory view showing a method for connection between end portions.
FIG. 10 is an explanatory view showing a method for connection between the end portions.

EXPLANATION OF REFERENCE NUMERALS

1...electrode, 1A...doped electrode, 3...current collector, 5...active material layer, 6...active material layer formed portion, 7...active material layer unformed portion, 11...electrode manufacturing system, 15...electrolyte solution treatment tank, 17, 19...doping tank, 23...cleaning tank, 25, 27, 29, 31, 33, 35, 37, 39, 40, 47, 49, 51, 52, 59, 73, 75, 77, 79, 81, 83, 85, 87, 89, 91, 93...conveyor roller, 101...supply roll, 103...winding roll, 105...supporting platform, 107...circulation filter unit, 109, 111...power source, 117...tab cleaner, 119...collection unit, 121... end portion sensor, 123, 135 ... partition plate, 125, 127, 145, 147...supporting rod, 137, 139, 141, 143...counter electrode unit, 144...mask, 149, 151...space, 153...conductive base material, 155...alkali metal-containing plate, 161...filter, 163...pump, 165...pipe, 201...guide mechanism, 203...guide bar, 205...main body portion, 207...surface portion, 209...guide roll, 211...base portion, 301, 303, 305...negative electrode, 401...end portion, 403...end portion, 405...connecting member, 407...hole

MODE FOR CARRYING OUT THE INVENTION

Example embodiments of the present disclosure will be explained with reference to the drawings.

<First Embodiment>

1. Configuration of Electrode 1

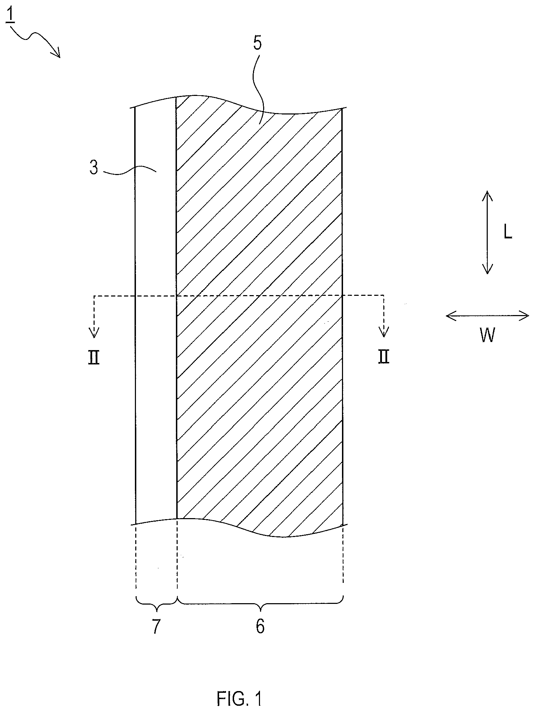

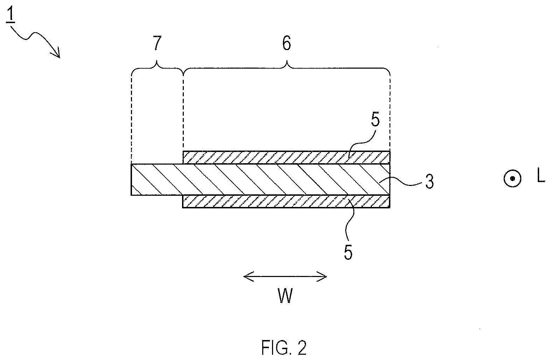

A configuration of an electrode 1 will be explained with reference to FIGS. 1 and 2. The electrode 1 has a strip-like shape. The electrode 1 includes a current collector 3 and an active material layer 5. The current collector 3 has a strip-like shape. The active material layer 5 is formed on both sides of the current collector 3.

The electrode 1 includes an active material layer formed portion 6 and an active material layer unformed portion 7 on its surface. The active material layer formed portion 6 is a portion where the active material layer 5 is formed. The active material layer unformed portion 7 is a portion where the active material layer 5 is not formed. The current collector 3 is exposed in the active material layer unformed portion 7.

The active material layer unformed portion 7 is in the form of a strip that extends in a longitudinal direction L of the electrode 1. The active material layer unformed portion 7 is located at an end portion of the electrode 1 in a width direction W of the electrode 1.

The current collector 3 is preferably made of a metal foil such as of copper, nickel, and stainless steel. The current collector 3 may be prepared by forming a conductive layer, the main component of which is a carbon material, on a metal foil. The current collector 3 has a thickness of, for example, 5 to 50 $\mu$m.

The active material layer 5 can be produced, for example, by applying a slurry on the current collector 3 and drying the slurry. The slurry contains an active material, a binder, and the like.

Examples of the binder may include rubber-based binders such as styrenebutadiene rubber (SBR), and NBR; fluorine-based resin such as polytetrafluoroethylene and polyvinylidene fluoride; polypropylene, polyethylene, fluorine modified (meth) acrylic binder as disclosed in Japanese Unexamined Patent Application Publication No. 2009-246137.

The slurry may include other components in addition to the active material and the binder. Examples of the other components may include a conductive agent and a thickener. Examples of the conductive agent may include carbon black, graphite, vapor-grown carbon fiber and metal powder. Examples of the thickener may include carboxyl methyl cellulose, sodium salt or ammonium salt thereof, methyl cellulose, hydroxymethyl cellulose, ethyl cellulose, hydroxypropyl cellulose, polyvinyl alcohol, oxidized starch, phosphorylated starch and casein.

The thickness of the active material layer 5 is not particularly limited. The thickness of the active material layer 5 is, for example, 5 to 500 $\mu$m, preferably 10 to 200 $\mu$m, and particularly preferably 10 to 100 $\mu$m. The active material included in the active material layer 5 is not particularly limited as long as it is an electrode active material applicable to a battery or a capacitor that uses insertion/desorption of alkali metal ions. The active material may be a negative electrode active material or a positive electrode active material.

The negative electrode active material is not particularly limited. Examples of the negative electrode active material may include a carbon material such as a composite carbon material, and metal or semimetal, such as Si and Sn, that can be alloyed with lithium or a material that includes oxides of these metal or semimetal. Examples of the composite carbon material may include graphite, easily-graphitizable carbon, hardly-graphitizable carbon, and a composite carbon material made by coating graphite particles with carbides of pitch and resin. Specific examples of the carbon material may include a carbon material disclosed in Japanese Unexamined Patent Application Publication No. 2013-258392. Specific examples of the metal or semimetal that can be alloyed with lithium or the material that includes oxides of these metal or semimetal may include materials disclosed in Japanese Unexamined Patent Application Publication No. 2005-123175 and Japanese Unexamined Patent Application Publication No. 2006-107795.

Examples of the positive electrode active material may include transition metal oxides, sulfur-based active materials, and activated carbon. Examples of the transition metal oxides may include cobalt oxide, nickel oxide, manganese oxide, and vanadium oxide. Examples of the sulfur-based active materials may include elemental sulfur and metal sulfides. Both the positive-electrode active material and the negative electrode active material may be made from a single substance or made by mixing two or more substances.

An electrode manufacturing system 11, which will be described later, is used to pre-dope the active material included in the active material layer 5 with the alkali metal. The alkali metal for pre-doping the active material is preferably lithium or sodium, and lithium is particularly preferable. In a case where the electrode 1 is used to manufacture a lithium-ion rechargeable battery, a density of the active material layer 5 is preferably 1.30 to 2.00 g/cc, and particularly preferably 1.40 to 1.90 g/cc.

2. Configuration of Electrode Manufacturing System 11

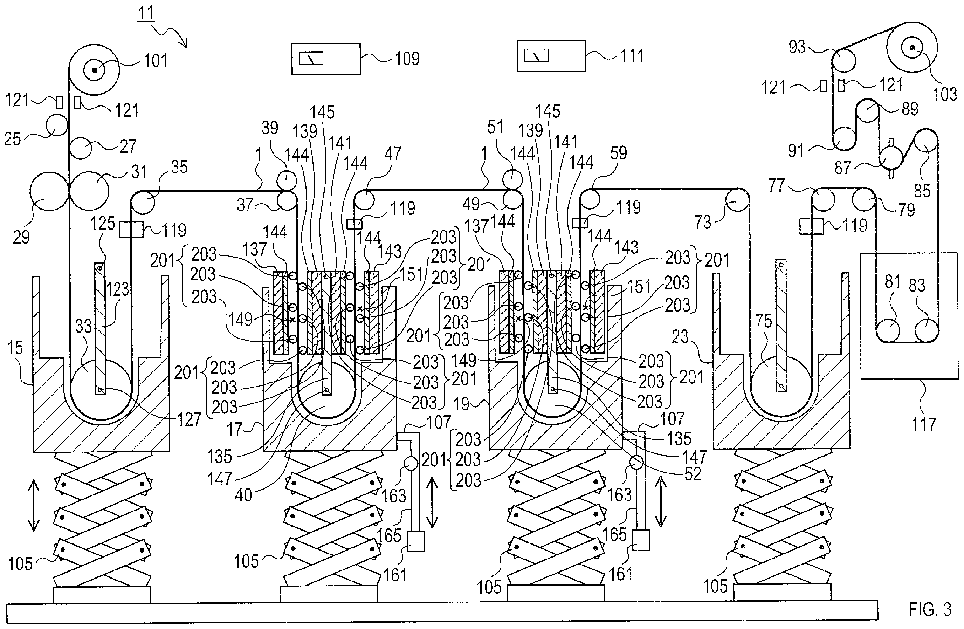

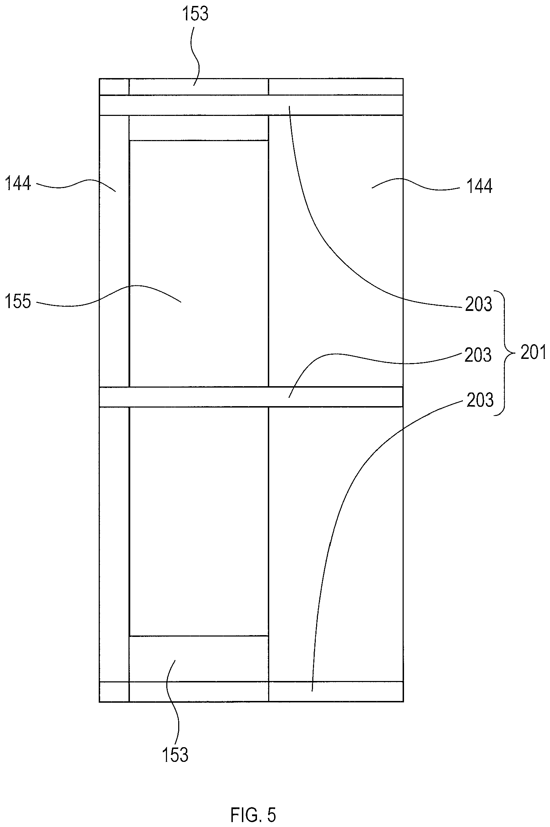

A configuration of an electrode manufacturing system 11 will be explained with reference to FIGS. 3 to 7. As shown in FIG. 3, the electrode manufacturing system 11 comprises an electrolyte solution treatment tank 15, doping tanks 17, 19, a cleaning tank 23, conveyor rollers 25, 27, 29, 31, 33, 35, 37, 39, 40, 47, 49, 51, 52, 59, 73, 75, 77, 79, 81, 83, 85, 87, 89, 91, 93 (hereinafter, these conveyor rollers may be collectively referred to as a group of conveyor rollers), a supply roll 101, a winding roll 103, supporting platforms 105, circulation filter units 107, two power sources 109, 111, a tab cleaner 117, collection units 119, end portion sensors 121, counter electrode units 137, 139, 141, 143, masks 144, and guide mechanisms 201. The group of conveyor rollers corresponds to a conveyer unit.

The electrolyte solution treatment tank 15 is a square tank with an open top. A bottom surface of the electrolyte solution treatment tank 15 has a substantially U-shaped cross section. The electrolyte solution treatment tank 15 includes a partition plate 123. The partition plate 123 is supported by a supporting rod 125 that passes through an upper end of the partition plate 123. The supporting rod 125 is fixed on a wall or the like which is not shown in the drawings. The partition plate 123 extends in a vertical direction and divides an interior of the electrolyte solution treatment tank 15 into two spaces.

The conveyor roller 33 is attached to a lower end of the partition plate 123. The partition plate 123 and the conveyor roller 33 are supported by a supporting rod 127 that passes through the partition plate 123 and the conveyor roller 33. The partition plate 123 is cut off near the lower end so that the partition plate 123 does not interfere with the conveyor roller 33. There is a space between the conveyor roller 33 and the bottom surface of the electrolyte solution treatment tank 15.

The doping tank 17 is a square tank with an open top. A bottom surface of the doping tank 17 has a substantially U-shaped cross section. The doping tank 17 includes a partition plate 135.

The partition plate 135 is supported by a supporting rod 145 that passes through an upper end of the partition plate 135. The supporting rod 145 is fixed on a wall or the like which is not shown in the drawings. The partition plate 135 extends in a vertical direction and divides an interior of the doping tank 17 into two spaces. A conveyor roller 40 is attached to a lower end of the partition plate 135. The partition plate 135 and the conveyor roller 40 are supported by a supporting rod 147 that passes through the partition plate 135 and the conveyor roller 40. The partition plate 135 is cut off near the lower end so that the partition plate 135 does not interfere with the conveyor roller 40. There is a space between the conveyor roller 40 and the bottom surface of the doping tank 17.

Four counter electrode units 137, 139, 141, 143 and four masks 144 and four guide mechanisms 201 are stored in the doping tank 17.

The counter electrode unit 137 is disposed on the upstream side in the doping tank 17. The counter electrode units 139, 141 are disposed to sandwich the partition plate 135 from both sides. The counter electrode unit 143 is disposed on the downstream side in the doping tank 17.

There is a space 149 between the counter electrode unit 137 and the counter electrode unit 139. There is a space 151 between the counter electrode unit 141 and the counter electrode unit 143. The counter electrode units 137, 139, 141, 143 are coupled to one electrode of the power source 109.

Each of the counter electrode units 137, 139, 141, 143 may be coupled to a different power source. In this case, the counter electrode units 137, 139, 141, 143 can be controlled separately. In addition, depending on a doped state of the electrode 1 in the doping process, electrical adjustment of the counter electrode units 137, 139, 141, 143 becomes easy. As a result, a desired doped electrode 1A becomes easy to manufacture. The doped electrode 1A is the electrode 1 that includes the active material layer 5 doped with the alkali metal.

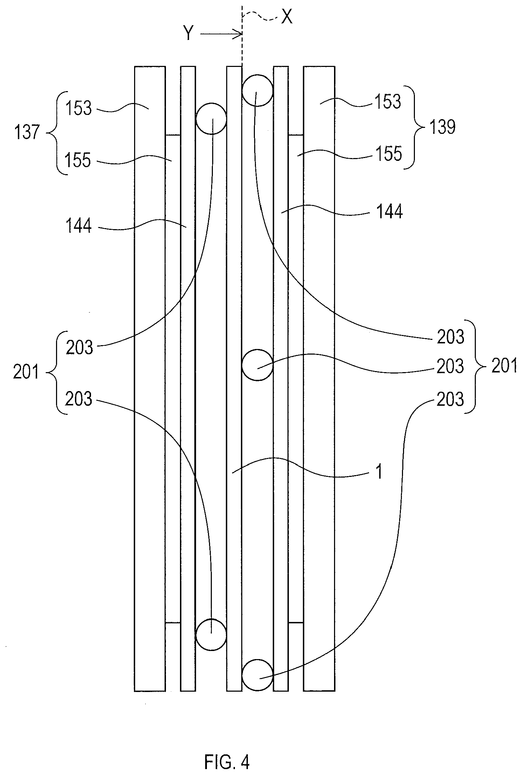

As shown in FIG. 4, the counter electrode unit 137 has a configuration in which a conductive base material 153 and an alkali metal-containing plate 155 are stacked. The counter electrode unit 137 is disposed in a direction in which the electrode 1 being conveyed and the alkali metal-containing plate 155 face each other.

Examples of the material of the conductive base material 153 include copper, stainless steel, and nickel. The form of the alkali metal-containing plate 155 is not particularly limited, and includes, for example, an alkali metal plate, alkali metal alloy plate, and the like. The thickness of the alkali metal-containing plate 155 is, for example, 0.03 to 6 mm. The counter electrode units 139, 141, 143 have a configuration similar to the counter electrode unit 137. The counter electrode units 139, 141, 143 are also disposed in a direction in which the electrode 1 being conveyed and the alkali metal-containing plate 155 face each other.

As shown in FIG. 3, the masks 144 are attached to the respective counter electrode units 137, 139, 141, 143. As shown in FIG. 4, the masks 144 are attached to surfaces of the alkali metal-containing plate 155, these surfaces are on the counter electrode units 137, 139, 141, 143. The masks 144 do not cover portions of the counter electrode units 137, 139, 141, 143 facing the active material layer formed portion 6 and cover the other portions. The masks 144 facilitate fine adjustment of a doping width. The doping width is a width of a portion of the electrode 1 subject to pre-doping. The masks 144 can inhibit the pre-doping to portions other than the active material layer formed portion 6.

Examples of the material of the mask 144 may include polyethylene, polypropylene, polyphenylene sulfide, nylon, polyetheretherketone, and polytetrafluoroethylene. Polypropylene is preferable as the material of the masks 144. The thickness of the mask 144 is, for example, preferably 10 $\mu$m or more and 10 mm or less, and more preferably 50 $\mu$m or more and 5 mm or less.

As shown in FIG. 1, the guide mechanism 201 is disposed between the electrode 1 and the counter electrode unit 137, between the electrode 1 and the counter electrode unit 139, between the electrode 1 and the counter electrode unit 141, and between the electrode 1 and the counter electrode unit 143.

Hereinafter, the guide mechanism 201 disposed between the electrode 1 and the counter electrode unit 137 is defined as the guide mechanism 201 on the side of the counter electrode unit 137. The guide mechanism 201 disposed between the electrode 1 and the counter electrode unit 139 is defined as the guide mechanism 201 on the side of the counter electrode unit 139. The guide mechanism 201 disposed between the electrode 1 and the counter electrode unit 141 is defined as the guide mechanism 201 on the side of the counter electrode unit 141. The guide mechanism 201 disposed between the electrode 1 and the counter electrode unit 143 is defined as guide mechanism 201 on the side of the counter electrode unit 143.

The guide mechanism 201 comprises, for example, as shown in FIGS. 3 to 5, a plurality of guide bars 203. The guide bars 203 can have various shapes. The guide bars 203 are preferably cylindrical members. If the guide bars 203 are cylindrical members, damage to the electrode 1 can be inhibited even if the guide bars 203 contact the electrode 1. The plurality of guide bars 203 are aligned along a conveying direction of the electrode 1. A distance between the aligned guide bars 203 (hereinafter, referred to as a pitch distance) is, for example, preferably in a range of 0.05 m or more and 1.1 m or less, more preferably in a range of 0.1 m or more and 1.0 m or less, and particularly preferably in a range of 0.1 m or more and 0.6 m or less. An axial direction of the guide bars 203 is parallel to the width direction W of the electrode 1. For example, the plurality of guide bars 203 are not in contact with the alkali metal-containing plate 155. The guide bars 203 do not rotate, for example, unlike a later-described guide roll 209. Surface portions 207 of the guide bars 203, which will be described later, may rotate.

When the electrode 1 is moved in a direction of the alkali metal-containing plate 155, the electrode 1 comes into contact with the guide bar 203. The electrode 1 that comes into contact with the guide bar 203 cannot be moved in the direction of the alkali metal-containing plate 155 any further.

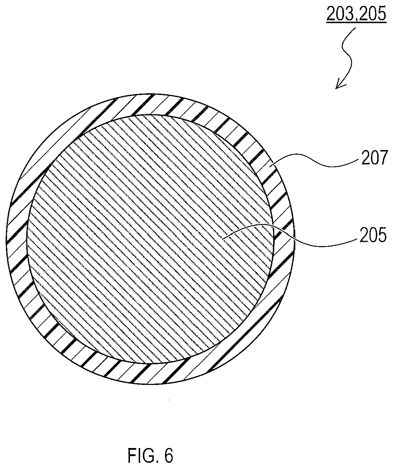

The guide bar 203 comprises, for example, as shown in FIG. 6, a main body portion 205 and the surface portion 207. The main body portion 205 is a cylindrical member. The surface portion 207 is a layer on a surface of the main body portion 205. The surface portion 207 coats the main body portion 205. The surface portion 207 is, for example, formed by applying a coating material to the surface of the main body portion 205. The surface portion 207 is, for example, pressure-bonded to the surface of the main body portion 205. For example, the tubular surface portion 207 covers the main body portion 205. The main body portion 205 is formed from, for example, materials including one or more kinds selected from a group consisting of thermoplastic resin, thermosetting resin, photocurable resin, metal, and metal oxide. The surface portion 207 includes, for example, an organic matter. Examples of the organic matters include, for example, Teflon (registered trademark), polyethylene, polypropylene, polyphenylene sulfide, perfluoroalkoxy fluororesin (PFA), polyvinylidene fluoride, polyetheretherketone, polyimide, phenol resin, melamine resin, urea resin, polyester resin, epoxy resin, ethylene propylene rubber, butyl rubber, acrylonitrile rubber, fluororubber, and chlorosulfonated polyethylene rubber. If the surface portion 207 is made from the aforementioned organic matters, damage to the electrode 1 can be further inhibited.

The specific guide bar 203 included in the guide mechanism 201 on the side of the counter electrode unit 137 is defined as a first guide bar. Among the guide bars 203 included in the guide mechanism 201 on the side of the counter electrode unit 13, the guide bar 203 that is closest to the first guide bar is defined as a second guide bar. In the conveying direction of the electrode 1, a position of the first guide bar and a position of the second guide bar are shifted. An amount of shift between the position of the first guide bar and the position of the second guide bar is defined as a shift amount A. The shift amount A is a value preferably in a range of 15 mm or more and 100 mm or less, and more preferably in a range of 30 mm or more and 50 mm or less. The shift amount A is, for example, 30 mm.

The specific guide bar 203 included in the guide mechanism 201 on the side of the counter electrode unit 141 is defined as a third guide bar. Among the guide bars 203 included in the guide mechanism 201 on the side of the counter electrode unit 143, the guide bar 203 that is closest to the third guide bar is defined as a fourth guide bar. In the conveying direction of the electrode 1, a position of the third guide bar and a position of the fourth guide bar are shifted. An amount of shift between the position of the third guide bar and the position of the fourth guide bar is defined as a shift amount B. The shift amount B is a value preferably in a range of 15 mm or more and 100 mm or less, and more preferably in a range of 30 mm or more and 50 mm or less. The shift amount B is, for example, 30 mm.

The electrode 1 passes between the guide mechanism 201 on the side of the counter electrode unit 137 and the guide mechanism 201 on the side of the counter electrode unit 139. The guide mechanism 201 on the side of the counter electrode unit 137 inhibits a distance between the electrode 1 and the counter electrode unit 137 from being too small. The guide mechanism 201 on the side of the counter electrode unit 139 inhibits a distance between the electrode 1 and the counter electrode unit 139 from being too small.

The electrode 1 passes between the guide mechanism 201 on the side of the counter electrode unit 141 and the guide mechanism 201 on the side of the counter electrode unit 143. The guide mechanism 201 on the side of the counter electrode unit 141 inhibits a distance between the electrode 1 and the counter electrode unit 141 from being too small. The guide mechanism 201 on the side of the counter electrode unit 143 inhibits a distance between the electrode 1 and the counter electrode unit 143 from being too small.

Accordingly, the four guide mechanisms 201 stored in the doping tank 17 maintain the distances between the electrode 1 and the counter electrode units 137, 139, 141, 143 within a fixed range. The fixed range is, for example, preferably 3 mm or more and 20 mm or less, more preferably 5 mm or more and 16 mm or less, and particularly preferably 5 mm or more and 8 mm or less. The distance between the electrode 1 and the respective counter electrode units 137, 139, 141, 143 is a distance between a surface of the alkali metal-containing plate 155 and the electrode 1 in a thickness direction of the electrode 1.

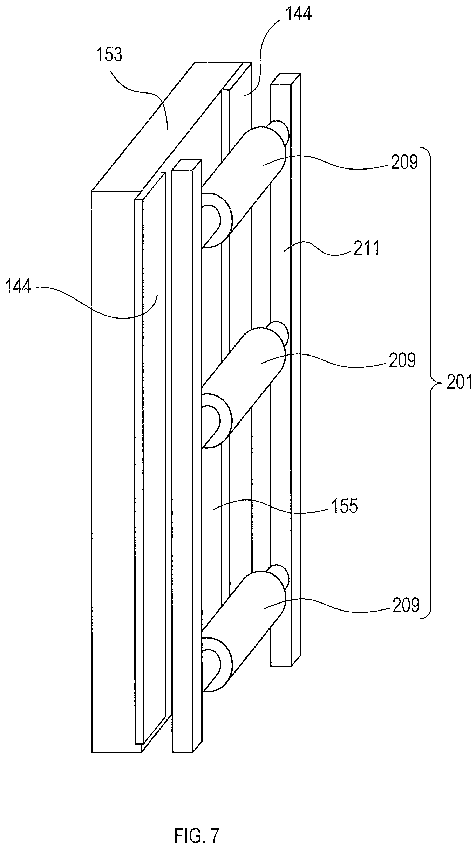

The guide mechanism 201 may, for example, as shown in FIG. 7, comprise a plurality of guide rolls 209. The guide rolls 209 face the electrode 1 being conveyed. The guide rolls 209 are cylindrical members. The plurality of guide rolls 209 are aligned along the conveying direction of the electrode 1. A distance between the aligned guide rolls 209 is also referred to as a pitch distance hereinafter. The pitch distance in the guide rolls 209 is, for example, in a range of 0.1 m or more and 1.0 m or less. Axial directions of guide rolls 209 are parallel to the width direction W of the electrode 1. The guide rolls 209 are attached to a base portion 211 so that the guide rolls 209 can rotate around center axes thereof.

Each of the guide rolls 209 comprises, for example, as shown in FIG. 6, the main body portion 205 and the surface portion 207. The main body portion 205 is a cylindrical member. The surface portion 207 is a layer formed on the surface of the main body portion 205. The surface portion 207 coats the main body portion 205. The surface portion 207 is formed, for example, by applying a coating material to the surface of the main body portion 205. The surface portion 207 is, for example, pressure-bonded to the surface of the main body portion 205. For example, the tubular surface portion 207 covers the main body portion 205. The main body portion 205 is made from materials including one or more kinds selected from a group consisting of, for example, thermoplastic resin, thermosetting resin, photocurable resin, metal, and metal oxide. The surface portion 207 includes, for example, an organic matter. Examples of the organic matter include, for example, Teflon, polyethylene, polypropylene, polyphenylene sulfide, PFA, polyvinylidene fluoride, polyetheretherketone, polyimide, phenol resin, melamine resin, urea resin, polyester resin, epoxy resin, ethylene propylene rubber, butyl rubber, acrylonitrile rubber, fluororubber, and chlorosulfonated polyethylene rubber. If the surface portion 207 is made from the aforementioned organic matters, damage to the electrode 1 can be further inhibited.

In the guide mechanism 201 comprising the guide rolls 209, similar to the guide mechanism 201 comprising the guide bars 203, the shift amounts A, B can be, for example, 30 mm. In case of the guide mechanism 201 comprising the guide rolls 209, the shift amounts A, B are shift amounts of the positions of the guide rolls 209.

The doping tank 19 has a configuration basically similar to that of the doping tank 17. In the doping tank 19, the counter electrode units 137, 139, 141, 143, the masks 144, and the guide mechanisms 201 are disposed in a similar manner as in the doping tank 17.

However, the doping tank 19 includes the conveyor roller 52 therein instead of the conveyor roller 40. The counter electrode units 137, 139, 141, 143 stored in the doping tank 19 are coupled to one electrode of the power source 111.

The cleaning tank 23 has a configuration basically similar to that of the electrolyte solution treatment tank 15. However, the cleaning tank 23 includes the conveyor roller 75 therein instead of the conveyor roller 33.

A dope solution taken out from the doping tank 19 adheres to the electrode 1 that has passed through the doping tank 19. The dope solution that has adhered to the electrode 1 is efficiently removed in the cleaning tank 23. Therefore, the electrode 1 can be easily handled in the next step.

A cleaning solution below, for example, is stored in the cleaning tank 23. The cleaning solution is preferably an organic solvent, and preferably contains an aprotic solvent having a boiling point of 150°C or less at one atmospheric pressure. Examples of the aprotic solvent having a boiling point of 150°C or less at one atmospheric pressure include at least one kind selected from a carbonate-based solvent, an ester-based solvent, an ether-based solvent, a hydrocarbon-based solvent, a ketone-based solvent, and a nitrile-based solvent.

Among them, the carbonate-based solvent is preferable. At least one kind selected from dimethyl carbonate, diethyl carbonate, methyl propyl carbonate and ethyl methyl carbonate is particularly preferable as the carbonate-based solvent. Use of the cleaning solution as such facilitates removal of the cleaning solution from the cleaned electrode 1.

In the cleaning tank 23, the dope solution taken from the doping tank 19 is accumulated. Therefore, it is preferable to maintain a certain quality of the cleaning solution, such as by adding or replacing the cleaning solution. An example method for grasping the quality of the cleaning solution may be to install sensors such as an insulation resistance tester and a conductivity meter in the cleaning tank 23 and regularly check values measured by these sensors.

Among the group of conveyor rollers, the conveyor rollers 37, 39, 49, 51 are made from an electrically conductive material. The conveyor rollers 37, 39, 49, 51 are electrically conductive electric power supply rollers. Examples of the electrically conductive material may include stainless steel, gold, copper, and rhodium. Copper is particularly preferable as the electrically conductive material. The electrically conductive material may be made by mixing two or more materials. Presence of the electrically conductive material particularly on surfaces of the electric power supply rollers helps inhibit reaction between the doped electrode 1A and the electric power supply rollers. As a result, the high quality doped electrode 1A can be mass-produced.

Among the group of conveyor rollers, the conveyor rollers other than the electrically conductive electric power supply rollers are made of elastomer except for their bearing portion. The group of conveyor rollers convey the electrode 1 along a certain path. The path is a path that starts from the supply roll 101, passes through the electrolyte solution treatment tank 15, the doping tank 17, the doping tank 19, the cleaning tank 23, and the tab cleaner 117 in this order, and ends at the winding roll 103.

Of the path through which the group of conveyor rollers convey the electrode 1, a part of the path that passes through the electrolyte solution treatment tank 15 is a path that is first directed downward by the conveyor rollers 29, 31, and then directed upward by the conveyor roller 33.

Of the path through which the group of conveyor rollers convey the electrode 1, a part of the path that passes through the doping tank 17 is as follows. First, the path is directed downward by the conveyor roller 37, and runs downward in the space 149 of the doping tank 17. Then, the path is directed upward by the conveyor roller 40, and runs upward in the space 151 of the doping tank 17. Finally, the path is directed horizontally by the conveyor roller 47, and runs toward the doping tank 19.

Of the path through which the group of conveyor rollers convey the electrode 1, a part of the path that passes through the doping tank 19 is as follows. First, the path is directed downward by the conveyor roller 49, and runs downward in the space 149 of the doping tank 19. Then, the path is directed upward by the conveyor roller 52, and runs upward in the space 151 of the doping tank 19. Finally, the path is directed horizontally by the conveyor roller 59, and runs toward the cleaning tank 23.

Of the path through which the group of conveyor rollers convey the electrode 1, a part of the path that passes through the cleaning tank 23 is first directed downward by the conveyor roller 73, and then directed upward by the conveyor roller 75.

The electrode 1 is wound around the supply roll 101. In other words, the supply roll 101 holds the electrode 1 in a wound state. The active material in the electrode 1 held by the supply roll 101 is not yet doped with alkali metal.

The group of conveyor rollers draw and convey the electrode 1 held by the supply roll 101. The winding roll 103 winds up and stores the electrode 1 conveyed by the group of conveyor rollers. When the electrode 1 is conveyed along the path that passes through the doping tanks 17, 19, the active material layer 5 is doped with the alkali metal. The method of doping with the alkali metal is a method of electrically doping the active material with the alkali metal in the doping tanks 17, 19 by using the counter electrode units 137, 139, 141, 143 provided to face the electrode 1. Doping the active material layer 5 with the alkali metal makes the electrode 1 the doped electrode 1A that includes the active material layer 5 doped with the alkali metal. The electrode 1 stored in the winding roll 103 is the doped electrode 1A.

The supporting platforms 105 support the electrolyte solution treatment tank 15, the doping tanks 17, 19, and the cleaning tank 23 from below. The supporting platforms 105 can change their height. Each of the doping tanks 17, 19 has the circulation filter unit 107. The circulation filter unit 107 includes a filter 161, a pump 163, and a pipe 165.

In the circulation filter unit 107 disposed in the doping tank 17, the pipe 165 is a circulation pipe that exits the doping tank 17, passes through the pump 163 and the filter 161 in this order, and returns to the doping tank 17. The dope solution in the doping tank 17 circulates through the pipe 165 and the filter 161 by a driving force of the pump 163, and returns to the doping tank 17.

At this time, foreign matters in the dope solution are filtered by the filter 161. Such foreign matters include those precipitated from the dope solution and those generated from the electrode 1. A material for the filter 161 is a resin such as polypropylene and polytetrafluoroethylene. A pore size of the filter 161 can be appropriately determined. The pore size of the filter 161 is, for example, 0.2 $\mu$m or more and 50 $\mu$m or less.

The circulation filter units 107 disposed in the doping tank 19 have a similar configuration and a similar effect. In FIG. 3, the dope solution is not illustrated for the purpose of convenience.

One terminal of the power source 109 is coupled to the conveyor rollers 37, 39. The other terminal of the power source 109 is coupled to the counter electrode units 137, 139, 141, 143 disposed in the doping tank 17. The electrode 1 contacts the conveyor rollers 37, 39. The electrode 1 and the counter electrode units 137, 139, 141, 143 are submerged in the dope solution, which is an electrolyte solution. Accordingly, in the doping tank 17, the electrode 1 is electrically connected to the counter electrode units 137, 139, 141, 143 via the electrolyte solution. The electrical connection path between the electrode 1 and the respective counter electrode units 137, 139, 141, 143 corresponds to the connection unit.

One terminal of the power source 111 is coupled to the conveyor rollers 49, 51. The other terminal of the power source 111 is coupled to the counter electrode units 137, 139, 141, 143 disposed in the doping tank 19. The electrode 1 contacts the conveyor rollers 49, 51. The electrode 1 and the counter electrode units 137, 139, 141, 143 are submerged in the dope solution, which is an electrolyte solution. Accordingly, in the doping tank 19, the electrode 1 is electrically connected to the counter electrode units 137, 139, 141, 143 via the electrolyte solution. The electrical connection path between the electrode 1 and the respective counter electrode units 137, 139, 141, 143 corresponds to the connection unit.

The tab cleaner 117 cleans the active material layer unformed portion 7 of the doped electrode 1A. If a residual organic component derived from the dope solution or the like remains in the active material layer unformed portion 7 of the doped electrode 1A, a welding defect is likely to occur when the active material layer unformed portion 7 is welded.

The collection unit 119 is disposed in each of the electrolyte solution treatment tank 15, the doping tanks 17, 19, and the cleaning tank 23. The collection unit 119 collects the solution the electrode 1 taken out from the tank and returns the collected solution back into the tank.

The end portion sensors 121 detect the position of an end portion in the width direction W of the electrode 1. An end portion position adjustment unit, which is not shown in the drawings, adjusts positions of the supply roll 101 and the winding roll 103 in the width direction W based on results of detection by the end portion sensors 121.

3. Composition of Dope Solution

When using the electrode manufacturing system 11, the dope solution is stored in the electrolyte solution treatment tank 15 and the doping tanks 17, 19. The dope solution includes alkali metal ions and a solvent. The dope solution is an electrolyte solution.

Examples of the solvent may include an organic solvent. The organic solvent is preferably an aprotic organic solvent. The solvent includes, for example, only an aprotic organic solvent. Examples of the aprotic organic solvent may include dimethyl carbonate, diethyl carbonate, methyl ethyl carbonate, vinylene carbonate, vinyl ethylene carbonate, ethylene carbonate, fluoroethylene carbonate, propylene carbonate, butylene carbonate, dipropyl carbonate, $\gamma$-butyrolactone, sulfolane, diethylene glycol dimethyl ether (diglyme), diethylene glycol methyl ethyl ether, triethylene glycol dimethyl ether (triglyme), triethylene glycol butyl methyl ether, and tetraethylene glycol dimethyl ether (tetraglyme).

In a case where the solvent is the above aprotic organic solvent, the electrode 1 can be doped efficiently. By using the doped electrode 1A doped with the aprotic organic solvent, a rechargeable battery with high battery stability can be obtained.

An organic solvent that belongs to a particular group is preferable as the aprotic organic solvent. For example, the organic solvent that belongs to the particular group is preferably dimethyl carbonate, diethyl carbonate, methyl ethyl carbonate, vinylene carbonate, vinyl ethylene carbonate, ethylene carbonate, fluoroethylene carbonate, and propylene carbonate.

In a case where the solvent is the organic solvent that belongs to a particular group, the electrode 1 can be doped particularly efficiently. By using the doped electrode 1A doped with the organic solvent that belongs to the particular group, a rechargeable battery with particularly high battery stability can be obtained.

Ionic liquids such as quaternary imidazolium salt, quaternary pyridinium salt, quaternary pyrrolidinium salt, and quaternary piperidinium salt may also be used as the organic solvent. The organic solvent may be made of a single component or may be a mixed solvent including two or more kinds of components.

The alkali metal ions contained in the dope solution are ions that make up an alkali metal salt. The alkali metal salt is preferably a lithium salt or a sodium salt. Examples of an anionic moiety that makes up the alkali metal salt may include a phosphorous anion having a fluoro group such as $PF_6^-$, $PF_3(C_2F_5)_3^-$, and $PF_3(CF_3)_3^-$; a boron anion having a fluoro group or a cyano group such as $BF_4^-$, $BF_2(CF)_2^-$, $BF_3(CF_3)^-$, and $B(CN)_4^-$; a sulfonyl imide anion having a fluoro group such as $N(FSO_2)_2^-$, $N(CF_3SO_2)_2^-$, and $N(C_2F_5SO_2)_2^-$; and an organic sulfonic acid anion having a fluoro group such as $CF_3SO_3^-$.

A concentration of the alkali metal salt in the dope solution is preferably 0.1 mol /L or more, and more preferably in a range of 0.5 to 1.5 mol /L. If the concentration of the alkali metal salt is in the above range, alkali metal pre-doping efficiently progresses.

The dope solution may further contain an additive such as vinylene carbonate, vinyl ethylene carbonate, 1-fluoroethylene carbonate, 1-(trifluoromethyl) ethylene carbonate, succinic anhydride, maleic anhydride, propane sultone, and diethyl sulfone.

The dope solution may further contain a flame retardant such as a phosphazene compound. From a viewpoint of effectively controlling a thermal runaway reaction when doping with the alkali metal, an amount of addition of the flame retardant is preferably 1 part by mass or more, and more preferably 3 parts by mass or more, and still more preferably 5 parts by mass or more, with respect to 100 parts by mass of the dope solution. From a viewpoint of obtaining a high-quality doped electrode, an amount of addition of the flame retardant is preferably 20 parts by mass or less, more preferably 15 parts by mass or less, and still more preferably 10 parts by mass or less, with respect to 100 parts by mass of the dope solution.

4. Method for Manufacturing Doped Electrode 1A Using Electrode Manufacturing System 11

A method for manufacturing the doped electrode 1A is as follows. The electrode 1 before the pre-doping is wound around the supply roll 101. Then, the electrode 1 before the pre-doping is drawn out from the supply roll 101, and conveyed to the winding roll 103 along the aforementioned path. Then, the electrolyte solution treatment tank 15, the doping tanks 17, 19, and the cleaning tank 23 are raised and set in fixed positions shown in FIG. 3.

The dope solution is stored in the electrolyte solution treatment tank 15 and the doping tanks 17, 19. The dope solution is a solution described in the above "3. Composition of Dope Solution". A cleaning solution is stored in the cleaning tank 23.

Then, the electrode 1 is conveyed along the aforementioned path from the supply roll 101 to the winding roll 103 by the group of conveyor rollers. The path on which the electrode 1 is conveyed is a path that passes through the doping tanks 17, 19. When the electrode 1 passes through the doping tanks 17, 19, the active material contained in the active material layer 5 is pre-doped with the alkali metal.

The electrode 1 wound around the supply roll 101 is defined as a wound body. As the electrode 1 continues to be conveyed, the wound body gradually becomes smaller. In order to continuously manufacture the doped electrode 1A, it is necessary to replace the wound body along the way. Upon replacing the wound body, it is desirable to connect the end portion in the longitudinal direction L of the electrode 1 included in the wound body before replaced and an end portion in the longitudinal direction L of the electrode 1 included in a replaced wound body (hereinafter, referred to as connection between the end portions). Connection between the end portions reduces time loss generated due to replacement of the wound body, and can increase productivity of the doped electrode 1A.

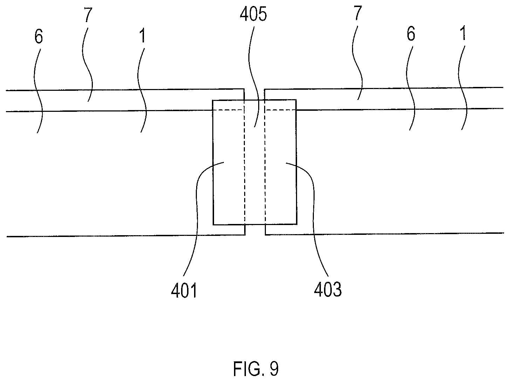

A method for connection between the end portions may include, for example, connecting an end portion 401 in the longitudinal direction L of the electrode 1 included in the wound body before replaced and an end portion 403 in the longitudinal direction L of the electrode 1 included in the replaced wound body by a connecting member 405, as shown in FIG. 9. The connecting member 405 may be, for example, a tape, a fusion film, and so on. The connecting member 405 extends over the end portions 401, 403. The connecting member 405 is joined to the end portions 401, 403.

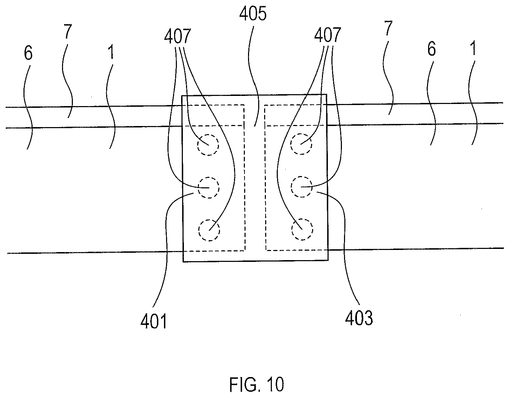

For example, FIG. 10 shows a method for connection between the end portions. Holes 407 are formed in each of the end portions 401, 403. The holes 407 penetrate the electrode 1. The connecting member 405 extends over the end portions 401, 403. For example, one sheet of the connecting member 405 is folded in half to sandwich the end portions 401, 403 from opposite sides. Two sheets of the connecting members 405 may be used to sandwich the end portions 401, 403 from opposite sides. The connecting member 405 covers the holes 407 in both surfaces of the respective end portions 401, 403. The connecting member 405 is a heat-fusion film. The connecting member 405 is fusion-bonded to the end portions 401, 403 on both surfaces of the end portions 401, 403. In addition, the connecting member 405 on one side of the electrode 1 and the connecting member 405 on the other side of the electrode 1 are in contact with each other via the holes 407 and are fusion-bonded.

In the method shown in FIG. 10, even if the connecting member 405 is soaked in the dope solution or a high tension is applied to the connecting member 405, it is difficult for the end portions 401, 403 to separate.

In the doping tanks 17, 19, the distance between the electrode 1 and the respective counter electrode units 137, 139, 141, 143 is maintained in a fixed range by the guide mechanism 201 disposed between the electrode 1 and the respective counter electrode units 137, 139, 141, 143. The fixed range is, for example, a range of 5 mm or more and 16 mm or less.

The group of conveyor rollers convey the electrode 1 to the cleaning tank 23. While being conveyed by the group of conveyor rollers, the electrode 1 is cleaned in the cleaning tank 23.

The group of conveyor rollers continuously convey the electrode 1 to the tab cleaner 117. A part of the electrode 1 conveyed to the tab cleaner 117 has been subjected to the pre-doping process and turned to be the doped electrode 1A. The tab cleaner 117 cleans the active material layer unformed portion 7 of the doped electrode 1A.

The doped electrode 1A may be a positive electrode or a negative electrode. In a case of manufacturing the positive electrode, the positive electrode active material is doped with the alkali metal in the electrode manufacturing system 11. In a case of manufacturing the negative electrode, the negative electrode active material is doped with the alkali metal in the electrode manufacturing system 11.

In a case where lithium is occluded in the negative electrode active material of a lithium ion capacitor, a doping amount of the alkali metal is preferably 70 to 95% with respect to a theoretical capacity of the negative electrode active material. In a case where lithium is occluded in the negative electrode active material of a lithium-ion rechargeable battery, the doping amount of the alkali metal is preferably 10 to 30% with respect to the theoretical capacity of the negative electrode active material.

5. Method for Manufacturing Rechargeable Battery

The rechargeable battery is, for example, a lithium-ion rechargeable battery, and the like. The rechargeable battery includes an electrode cell. The electrode cell has a configuration in which a negative electrode and a positive electrode are stacked. In the rechargeable battery, for example, the negative electrode is manufactured by the above "4. Method for Manufacturing Doped Electrode 1A by Using Electrode Manufacturing System 11". Then, the negative electrode and the positive electrode are stacked to form the electrode cell.

6. Effect Exerted by Electrode Manufacturing System 11, and Method for Manufacturing Doped Electrode 1A

(6-1) The guide mechanism 201 maintains the distance between the electrode 1 and the respective counter electrode units 137, 139, 141, 143 in a fixed range in the doping tanks 17, 19. Therefore, non-uniform doping and precipitation of the alkali metal can be inhibited.

(6-2) The fixed range is in a range of 5 mm or more and 16 mm or less. Therefore, non-uniform doping and precipitation of the alkali metal can be further inhibited.

(6-3) The guide mechanism 201 comprises the guide bars 203 or the guide rolls 209. Therefore, non-uniform doping and precipitation of the alkali metal can be further inhibited.

(6-4) When the guide bars 203 or the guide rolls 209 have a configuration shown in FIG. 6, the electrode 1 contacts the surface portion 207 including the organic matter. Therefore, damage of the electrode 1 by the guide bars 203 or the guide rolls 209 can be inhibited

(6-5) In the doping tanks 17, 19, the pitch distance is 0.1 m or more and 1.0 m or less. Therefore, non-uniform doping and precipitation of the alkali metal can be further inhibited.


7. Embodiments

(Example 1)

(i) Manufacture of Electrode 1

A long strip-shaped current collector 3 was prepared. The current collector 3 was a negative electrode current collector. The size of the current collector 3 was 130 mm in width, 100 m in length, and 8 $\mu$m in thickness. The surface roughness Ra of the current collector 3 was 0.1 $\mu$m. The current collector 3 was made from copper foil. The active material layer 5 was formed on both sides of the current collector 3. The active material layer 5 was a negative electrode active material layer.

The amount of application of the active material layer 5 on one side of the current collector 3 was 100 g/m$^2$. As shown in FIG. 1, the active material layer 5 was formed along a longitudinal direction of the current collector 3. The active material layer 5 was formed over a width of 120 mm from an end portion of the current collector 3 in the width direction W. The width of the active material layer unformed portion 7 on the other end portion of the current collector 3 in the width direction W was 10 mm. The active material layer unformed portion 7 is a portion where the active material layer 5 is not formed. Then, drying and pressing were performed to obtain the electrode 1.

The active material layer 5 contained the negative electrode active material, carboxymethyl cellulose, acetylene black, a binder and a dispersant with a mass ratio of 88:3:5:3:1. The negative electrode active material was a mixture of a Si-based active material and a graphite-based active material. The negative electrode active material contained the Si-based active material and the graphite-based active material with a mass ratio of 2:8. The acetylene black corresponds to a conductive agent.

(ii) Manufacture of Counter Electrode Units 137, 139, 141, 143

A resin film made from polypropylene (PP) was attached to a copper plate. The size of the copper plate was 1000 mm in length, 220 mm in width, and 3 mm in thickness. The size of the resin film was 800 mm in length, 120 mm in width, and 470 $\mu$m in thickness. The resin film was in the form of a mesh having a plurality of apertures. The aperture ratio of the resin film was 50%.

A lithium (Li) foil was attached to the resin film. The length and the width of the Li foil were the same as those of the resin film. The thickness of the Li foil was 2 mm. The resin film and the Li foil were pressure-bonded to the copper plate with a roll press device to thereby obtain the counter electrode units 137, 139, 141, 143. A linear pressure in the pressure bonding was 5 kgf/cm. The copper plate corresponds to the conductive base material 153. The Li foil corresponds to the alkali metal-containing plate 155.

(iii) Manufacture of Doped Electrode 1A

The electrode manufacturing system 11 shown in FIG. 3 was prepared, and the electrode 1 was fed therethrough. The counter electrode units 137, 139, 141, 143, the masks 144, and the guide mechanisms 201 were disposed in each of the doping tanks 17, 19.

The guide bars 203 were made of SUS. The guide bars 203 had a cylindrical shape having a diameter of 2 mm. The guide bars 203 were disposed so that the distance between the alkali metal-containing plate 155 and the electrode 1 was maintained at 5 mm. The pitch distance was 500 mm. The values of the shift amount A and the shift amount B were 30 mm each. Table 1 shows conditions for the guide mechanisms 201. "Distance between electrode and counter electrode unit" in Table 1 means a distance between the alkali metal-containing plate 155 and the electrode 1 in the thickness direction of the electrode 1.

[Table 1]

| | | Example 1 | Example 2 | Example 3 | Example 4 | Example 5 | Example 6 | Example 7 | Example 8 | Example 9 | Comparative Example 1 |
|---|---|---|---|---|---|---|---|---|---|---|---|
| Guide mechanism | Guide bar | ○ | ○ | | ○ | ○ | ○ | ○ | ○ | ○ | |
| | Guide roll | | | ○ | | | | | | | |
| Surface portion made of Teflon | | | ○ | ○ | ○ | ○ | ○ | ○ | ○ | ○ | |
| Distance between electrode and counter electrode unit (mm) | | 5 | 5 | 5 | 10 | 3 | 16 | 5 | 5 | 5 | |
| Pitch distance (m) | | 0.5 | 0.5 | 0.5 | 0.5 | 0.5 | 0.5 | 0.1 | 0.8 | 1 | |
| | | | | | | | | | | | |
| Li precipitation | | Minor precipitation | None | None | None | Minor precipitation | None | None | None | Minor precipitation | Precipitation |
| Village in voltage stable state | | B | A | A | B | A | B | A | A | B | C |
| Charge/discharge efflciency distribution | | A | A | A | A | B | B | A | B | B | C |

EP 4 365 982 A1

Then, a dope solution was supplied into the doping tanks 17, 19. The dope solution was a solution that includes 1.2 M of $LiPF_6$. A solvent of the dope solution was a mixed solution of EC (ethylene carbonate) and DMC (dimethyl carbonate) with a volume ratio of 3:7.

Then, the electrode 1 and the counter electrode units 137, 139, 141, 143 fed through the electrode manufacturing system 11 were coupled to a direct current power source equipped with an electric current/voltage monitor. While the electrode 1 is conveyed at a speed of 2.1 m/min, 269 A of electric current was supplied in the entire electrode manufacturing system 11, and the pre-doping was performed. At this time, a pre-doping current density per unit area of the electrode 1 was 35 $mA/cm^2$. At this time, the center point in the width direction W of the active material layer 5 included in the electrode 1 matched the center point in the width direction W of the Li foil included in the counter electrode units 137, 139, 141, 143.

(iv) Evaluation of voltage in voltage stable state

In the manufacture of the doped electrode 1A, after the pre-doping is started, a change in voltage eventually became ±0.05 V or less (hereinafter, this state is referred to as a voltage stable state). When the voltage stable state was reached, no continuous increase of the voltage was observed even though the pre-doping was continued. It is preferable that the voltage in the voltage stable state is low. The voltage in the voltage stable state was evaluated in accordance with the following criteria. Table 1 shows the results of the evaluation. In Example 1, the voltage in the voltage stable state was 3.6 V.

A: The voltage in the voltage stable state is less than 3.5 V.
B: The voltage in the voltage stable state is 3.5 V or more and less than 5.0 V.
C: The voltage in the voltage stable state is 5.0 V or more.

(v) Evaluation of Li precipitation

Li precipitation in the obtained doped electrode 1A was evaluated by the following method. Visual confirmation was made whether white precipitates were observed in the doped electrode 1A. If the precipitates were observed, a small amount of the precipitates were taken out and immersed in ethanol. It was confirmed whether a reaction between the precipitates and ethanol was observed. If a reaction between the precipitates and ethanol was observed, it was determined that there was Li precipitation. The precipitation, if any, was classified into "minor precipitation" and "precipitation" in accordance with the following criteria. "Minor precipitation" indicates that an area of a portion where Li precipitation was observed is less than 10% with respect to an area of a pre-doped portion. "Precipitation" indicates that the area of the portion where Li precipitation was observed is 10% or more with respect to the area of the pre-doped portion. Table 1 shows the results of the evaluation.

(vi) Evaluation of charge and discharge efficiency distribution

Charge and discharge efficiency distribution of the doped electrode 1A was evaluated by the following method. In a dry room with a dew point of -60°C, a part of the doped electrode 1A was punched out with a Thomson blade of Takahashi Keisei Corporation. The portion punched out was prepared as a negative electrode. The shape of the negative electrode was a rectangle 2.6 cm long and 4.0 cm wide. The negative electrode included a terminal weld part that protruded outward from one side of the rectangle.

Then, a first half cell for evaluation was prepared by using the negative electrode. A method for preparing the first half cell for evaluation was described as below.

A separator, a counter electrode, and a separator were stacked in this order on one side of the negative electrode. On the other side of the negative electrode as well, a separator, a counter electrode, and a separator were stacked in this order. As a result, a stacked body was obtained. The separator was made of a polyethylene non-woven cloth having a thickness of 35 μm. The counter electrode was made by attaching metal lithium to an expanded copper foil. The basic form of the expanded copper foil was a rectangle 2.6 cm long and 3.9 cm wide. The expanded copper foil included a terminal weld part that protruded outward from one side of the rectangle.

Then, four sides of the stacked body were taped. The terminal weld part of the negative electrode and the terminal weld part of the counter electrode were ultrasonic-welded to a terminal made of copper. The size of the terminal was 5 mm in width, 50 mm in length, and 0.2 mm in thickness.

Then, the stacked body was interposed between two laminate films. The laminate film had a rectangular shape. The size of the laminate film was 6.5 cm long and 8.0 cm width. Three of four sides of one of the two laminate films and three of four sides of the other of the two laminate films were fusion-bonded to each other. As a result, the two laminate films formed a bag with only one side open. The stacked body was stored inside the bag.

Then, the stacked body in the bag was vacuum-impregnated with an electrolyte solution. The electrolyte solution contained 1.2 M of $LiPF_6$. A solvent of the electrolyte solution was a mixed solution containing EC (ethylene carbonate) and DMC (dimethyl carbonate) at a volume ratio of 3:7.

Then, the remaining one side of the four sides of the bag, which had not been fusion-bonded, was fusion-bonded. The first half cell for evaluation was completed in accordance with the aforementioned process. Basically by the method similar to the method for preparing the first half cell for evaluation, second and third half cells for evaluation were prepared.

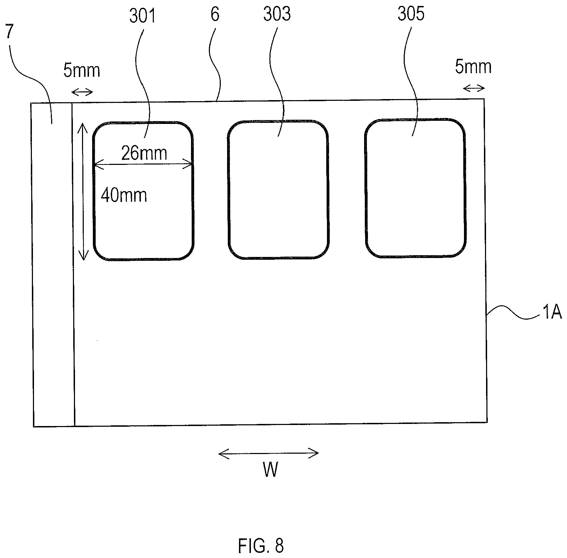

The negative electrodes used for the first to third half cells for evaluation were punched out from different parts of one doped electrode 1A. As shown in FIG. 8, the negative electrode 301 used for the first half cell for evaluation was punched out from a portion of the active material layer formed portion 6 on the side of the active material layer unformed portion 7 in the width direction W. The negative electrode 303 used for the second half cell for evaluation was punched out from a center portion of the active material layer formed portion 6 in the width direction W. The negative electrode 305 used for the third half cell for evaluation was punched out from a portion of the active material layer formed portion 6 on the side opposite to the active material layer unformed portion 7 in the width direction W.

The first to third half cells for evaluation correspond to the rechargeable battery. The method for preparing the first to third half cells for evaluation corresponds to the method for manufacturing the rechargeable battery.

The first to third half cells for evaluation were introduced into a constant temperature tank of 25°C. Then, an initial charge and discharge efficiency E, represented by a formula (1) and expressed in the unit of %, was calculated as below for each of the first to third half cells for evaluation:

$$\text{(Formula 1)} \quad E = (C1/C2) \times 100$$

where C1 indicates an initial discharge capacity, and C2 indicates an initial charge capacity, both of which are expressed in the unit of $mAh/cm^2$. The initial discharge capacity C1 is a capacity available when, after being charged at a constant current of 10 mA until a cell voltage reaches 0.01 V, the cell continues to be charged until a current value decreases to 1 mA with a constant voltage of 0.01V being applied. The initial charge capacity C2 is a capacity available when, after measurement of the initial discharge capacity C1, the cell is discharged at the constant current of 10 mA until the cell voltage reaches 2.0 V.

The respective initial charge and discharge efficiencies E in the first to third half cells for evaluation were defined as E1 to E3. The maximum value of E1 to E3 was defined as Emax. The minimum value of E1 to E3 was defined as Emin. A value obtained by subtracting Emin from Emax was defined as ΔE. In Example 1, E1 was 99%, E2 was 100%, and E3 was 99%.

Based on the value of ΔE, the charge and discharge efficiency distribution was evaluated in accordance with the following criteria. Table 1 shows the results of the evaluation.

A: ΔE is less than 5%.
B: ΔE is 5% or more and less than 15%.
C: ΔE is 15% or more.

ΔE is an index representing non-uniform doping. The smaller the ΔE, the smaller the non-uniform doping.

(Example 2)

The doped electrode 1A was produced basically in a similar manner as in Example 1, and evaluated. The guide bar 203 comprised the main body portion 205 made of SUS and the surface portion 207 made of PFA. Table 1 shows the results of the examination.

In Example 2, the result of evaluation on the voltage in the voltage stable state was A. There was no Li precipitation. The result of evaluation on the charge and discharge efficiency distribution was A.

(Example 3)

The doped electrode 1A was produced basically in a similar manner as in Example 2, and evaluated. The guide mechanism 201 comprised the guide roll 209 instead of the guide bar 203, as shown in FIG. 7. The guide roll 209 comprised the main body portion 205 made of SUS and the surface portion 207 made of PFA. Table 1 shows the results of the examination.

In Example 3, the result of evaluation on the voltage in the voltage stable state was A. There was no Li precipitation. The result of evaluation on the charge and discharge efficiency distribution was A.

(Example 4)

The doped electrode 1A was produced basically in a similar manner as in Example 2, and evaluated. The guide mechanism 201 maintained a distance of 10 mm between the alkali metal-containing plate 155 and the electrode 1. Table 1 shows the results of the examination.

In Example 4, the result of evaluation on the voltage in the voltage stable state was B. There was no Li precipitation. The result of evaluation on the charge and discharge efficiency distribution was A.

(Example 5)

The doped electrode 1A was produced basically in a similar manner as in Example 2, and evaluated. The guide mechanism 201 maintained a distance of 3 mm between the alkali metal-containing plate 155 and the electrode 1. Table 1 shows the results of the examination.

In Example 5, the result of evaluation on the voltage in the voltage stable state was A. The result of evaluation on the Li precipitation was "minor precipitation". The result of evaluation on the charge and discharge efficiency distribution was B.

(Example 6)

The doped electrode 1A was produced basically in a similar manner as in Example 2, and evaluated. The guide mechanism 201 maintained a distance of 16 mm between the alkali metal-containing plate 155 and the electrode 1. Table 1 shows the results of the examination.

In Example 6, the result of evaluation on the voltage in the voltage stable state was B. There was no Li precipitation. The result of evaluation on the charge and discharge efficiency distribution was B.

(Example 7)

The doped electrode 1A was produced basically in a similar manner as in Example 2, and evaluated. The pitch distance was set to 100 mm. Table 1 shows the results of the examination.

In Example 7, the result of evaluation on the voltage in the voltage stable state was A. There was no Li precipitation. The result of evaluation on the charge and discharge efficiency distribution was A.

(Example 8)

The doped electrode 1A was produced basically in a similar manner as in Example 2, and evaluated. The pitch distance was set to 800 mm. Table 1 shows the results of the examination.

In Example 8, the result of evaluation on the voltage in the voltage stable state was A. There was no Li precipitation. The result of evaluation on the charge and discharge efficiency distribution was B.

(Example 9)

The doped electrode 1A was produced basically in a similar manner as in Example 2, and evaluated. The pitch distance was set to 1000 mm. Table 1 shows the results of the examination.

In Example 9, the result of evaluation on the voltage in the voltage stable state was B. The result of evaluation on the Li precipitation was "minor precipitation". The result of evaluation on the charge and discharge efficiency distribution was B.

(Comparative example 1)

The doped electrode 1A was produced basically in a similar manner as in Example 1, and evaluated. The guide mechanism 201 was not disposed in the doping tanks 17, 19. Table 1 shows the results of the examination.

In Comparative example 1, the result of evaluation on the voltage in the voltage stable state was C. The result of evaluation on the Li precipitation was "precipitation". The result of evaluation on the charge and discharge efficiency distribution was C.

<Other Embodiments>

Although the embodiments of the present disclosure have been explained hereinbefore, implementation of the present disclosure should not be limited to the aforementioned embodiments and may be modified in various modes.

(1) Functions of one element in each of the aforementioned embodiments may be performed by two or more elements. Functions of two or more elements may be performed by one element. A part of configurations of each of the aforementioned embodiments may be omitted. At least a part of the configurations of each of the aforementioned embodiments may be added to or replaced with a different configuration of the aforementioned embodiments.

(2) Aside from the aforementioned method for manufacturing a doped electrode and system for manufacturing a doped electrode, the present disclosure may also be implemented in various forms such as a doped electrode, a rechargeable battery, and a method for manufacturing a rechargeable battery.

**Claims**

1. A method for manufacturing a doped electrode including an active material layer doped with an alkali metal, the method comprising:

   conveying a strip-shaped electrode including an active material layer along a path that passes through a doping tank that stores a dope solution containing ions of an alkali metal and an aprotic organic solvent, a counter electrode unit, and a guide mechanism;

   maintaining a distance between the strip-shaped electrode including the active material layer and the counter electrode unit in a fixed range in the doping tank by the guide mechanism disposed between the strip-shaped electrode including the active material layer and the counter electrode unit; and

   electrically connecting the strip-shaped electrode including the active material layer and the counter electrode unit via the doping solution in the doping tank.

2. The method for manufacturing a doped electrode according to claim 1, wherein the fixed range is in a range of 5 mm or more and 16 mm or less.

3. The method for manufacturing a doped electrode according to claim 1 or 2, wherein the guide mechanism comprises a guide bar or a guide roll.

4. The method for manufacturing a doped electrode according to claim 3, wherein the guide bar or the guide roll comprises a main body portion and a surface portion, the main body portion being made from a material including one or more kinds selected from a group consisting of a thermoplastic resin, a thermosetting resin, a photocurable resin, metal, and oxides of the metal, and the surface portion being formed on a surface of the main body portion and made from a material including an organic matter.

5. The method for manufacturing a doped electrode according to claim 3 or 4, wherein a plurality of the guide bars or the guide rolls are disposed at an interval of 0.1 m or more and 1.0 m or less in the doping tank.

6. A system for manufacturing a doped electrode that manufactures a doped electrode including an active material layer doped with an alkali metal, comprising:

   a doping tank configured to store a dope solution containing ions of an alkali metal and an aprotic organic solvent;

   a counter electrode unit stored in the doping tank;

   a guide mechanism stored in the doping tank;

   a conveyer unit configured to convey a strip-shaped electrode including the active material layer along a path that passes through the doping tank; and

   a connection unit configured to electrically connect a conveyor roller included in the conveyer unit and the counter electrode unit,

   the guide mechanism being disposed between the strip-shaped electrode including the active material layer and the counter electrode unit,

   the guide mechanism being configured to maintain a distance between the strip-shaped electrode including the active material layer and the counter electrode unit in a fixed range in the doping tank.

FIG. 1

FIG. 2

FIG. 3

FIG. 4

FIG. 5

203,205

207

205

FIG. 6

FIG. 7

FIG. 8

FIG. 9

FIG. 10

## INTERNATIONAL SEARCH REPORT

| International application No. |
|---|
| **PCT/JP2022/011576** |

**A. CLASSIFICATION OF SUBJECT MATTER**

*H01M 4/139*(2010.01)i; *H01G 11/50*(2013.01)i; *H01G 11/86*(2013.01)i; *H01G 13/00*(2013.01)i
FI:  H01M4/139; H01G11/86; H01G11/50; H01G13/00 381

According to International Patent Classification (IPC) or to both national classification and IPC

**B. FIELDS SEARCHED**

Minimum documentation searched (classification system followed by classification symbols)
H01M4/139; H01G11/50; H01G11/86; H01G13/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)


**C. DOCUMENTS CONSIDERED TO BE RELEVANT**

| Category* | Citation of document, with indication, where appropriate, of the relevant passages | Relevant to claim No. |
|---|---|---|
| A | WO 2020/059225 A1 (JSR CORP) 26 March 2020 (2020-03-26) | 1-6 |
| A | WO 2020/084949 A1 (JM ENERGY CORPORATION) 30 April 2020 (2020-04-30) | 1-6 |
| A | JP 2018-113447 A (JSR CORP) 19 July 2018 (2018-07-19) | 1-6 |
| A | JP 2017-011068 A (NEC CORP) 12 January 2017 (2017-01-12) | 1-6 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/011576**

| Patent document cited in search report | | | Publication date (day/month/year) | Patent family member(s) | | | Publication date (day/month/year) |
|---|---|---|---|---|---|---|---|
| WO | 2020/059225 | A1 | 26 March 2020 | CN | 112805850 | A | |
| | | | | KR | 10-2021-0058830 | A | |
| WO | 2020/084949 | A1 | 30 April 2020 | US | 2021/0384486 | A1 | |
| | | | | CN | 112913047 | A | |
| JP | 2018-113447 | A | 19 July 2018 | US | 2019/0074143 | A1 | |
| | | | | WO | 2017/146223 | A1 | |
| | | | | EP | 3422377 | A1 | |
| | | | | CN | 108701553 | A | |
| | | | | KR | 10-2018-0114063 | A | |
| JP | 2017-011068 | A | 12 January 2017 | (Family: none) | | | |

Form PCT/ISA/210 (patent family annex) (January 2015)

**EP 4 365 982 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021106788 A
- JP H10308212 A
- JP 2008077963 A
- JP 2012049543 A
- JP 2012049544 A
- JP 2009246137 A
- JP 2013258392 A
- JP 2005123175 A
- JP 2006107795 A